# EUROPÄISCHE PATENTSCHRIFT

(11) **EP 3 624 142 B1**
(45) Veröffentlichungstag und Bekanntmachung des Hinweises auf die Patenterteilung: **07.06.2023**
(21) Anmeldenummer: 19020438.8
(22) Anmeldetag: 18.07.2019
(51) Int. Cl.: H01B 7/42, B60L 53/18, B60L 53/302, H01B 9/00

(54) **KRAFTFAHRZEUGLADEKABEL**
MOTOR VEHICLE CHARGING CABLE
CÂBLE DE CHARGE DE VOITURE AUTOMOBILE

(30) Priorität: 17.09.2018 DE 102018122680
(43) Veröffentlichungstag der Anmeldung: 18.03.2020
(73) Patentinhaber: Dr.Ing. h.c. F. Porsche Aktiengesellschaft, 70435 Stuttgart (DE)
(72) Erfinder: Heyne, Raoul, 75446 Wiernsheim (DE); Rönfanz, Jari, 75417 Mühlacker (DE)

(56) Entgegenhaltungen:
- WO-A1-2018/021401
- CN-U- 206 741 986
- CN-U- 207 425 394
- DE-A1-102015 120 048
- DE-A1-102016 112 306

## Beschreibung

Die Erfindung betrifft ein Kraftfahrzeugladekabel.

Aus der DE 10 2015 120 048 A1 ist ein Kraftfahrzeugladekabel für ein Gleichspannungsladen eines elektrischen Energiespeichers eines Kraftfahrzeugs bekannt. So ist aus diesem Stand der Technik ein Kraftfahrzeugladekabel mit einem ersten elektrischen Leiter für eine erste Gleichspannungsphase und einem zweiten elektrischen Leiter für eine zweite Gleichspannungsphase bekannt, wobei die beiden elektrischen Leiter von einem Kabelmantel des Ladekabels umgeben sind. Jeder der beiden elektrischen Leiter verfügt über jeweils eine als Isolationsschicht ausgebildete Leiterhülle, wobei in der Isolationsschicht des jeweiligen elektrischen Leiters Leiteradern des jeweiligen elektrischen Leiters verlaufen. Zwischen der jeweiligen Isolationsschicht und den jeweiligen Leiteradern des jeweiligen elektrischen Leiters ist ein Kühlmittelkanal ausgebildet, in dem ein Kühlfluid zum Kühlen des jeweiligen elektrischen Leiters führbar ist. Die jeweiligen Leiteradern des jeweiligen elektrischen Leiters sind dabei vom Kühlmittel umströmt und demnach von außen gekühlt.

DE 10 2016 112 306 A1 offenbart ein Ladekabel mit einem Kabelmantel und mit einem elektrischen Leiter, wobei der elektrische Leiter vom Kabelmantel außen umschlossen ist. Der elektrische Leiter weist einen Leiteraderstrang mit mehreren Leiteradern auf. Diese sind um einen inneren Kühlkanal herum angeordnet. Zwischen dem Kabelmantel und den Leiteradern sind Pufferelemente angeordnet, die die von Kühlmittel durchströmt sind, und die an der Folie anliegen, die zwischen den Pufferelementen und den Leiteradern angeordnet ist.

Aus CN 207 425 394 U, CN 206 741 986 U und WO 2018/021401 A1 ist weiterer Stand der Technik bekannt.

Aufgabe der Erfindung ist es, ein Kraftfahrzeugladekabel mit verbesserter Kühlung zu schaffen. Diese Aufgabe wird durch ein Kraftfahrzeugladekabel gemäß Patentanspruch 1 gelöst.

Beim erfindungsgemäßen Kraftfahrzeugladekabel sind der erste und zweite elektrische Leiter vom Kabelmantel außen gemeinsam umschlossen.

Beim erfindungsgemäßen Kraftfahrzeugladekabel weisen der erste und zweite elektrische Leiter jeweils eine Leiterhülle aus einer äußeren Hüllschicht und einer inneren Hüllschicht auf.

Ferner weisen der erste und zweite elektrische Leiter des erfindungsgemäßen Kraftfahrzeugladekabels jeweils innerhalb der Leiterhülle verlaufende, einen Leiteraderstrang bildende Leiteradern auf.

Ferner weisen der erste und zweite elektrische Leiter des erfindungsgemäßen Kraftfahrzeugladekabels jeweils einen von einem Rohr oder Schlauch definierten, ersten Kühlmittelkanal zur Kühlung des jeweiligen Leiteraderstrangs von innen auf, der von den jeweiligen Leiteradern umschlossen ist, wobei die Leiteradern, die jeweils mehrere Aderlitzen umfassen, um den ersten Kühlmittelkanal verdrillt sind.

Ferner weisen der erste und zweite elektrische Leiter des erfindungsgemäßen Kraftfahrzeugladekabels jeweils einen zweiten Kühlmittelkanal zur Kühlung des jeweiligen Leiteraderstrangs von außen auf, der die jeweiligen Leiteradern umschließt, wobei zwischen den Leiteradern des Leiteraderstrangs des jeweiligen elektrischen Leiters und der inneren Hüllschicht der Leiterhülle des jeweiligen elektrischen Leiters röhrenartige Abstandhalter positioniert sind, die den jeweiligen zweiten Kühlmittelkanal unterteilen, die von Kühlmittel durchströmt und umströmt sind, und die einerseits aneinander und andererseits an der inneren Hüllschicht der Leiterhülle des jeweiligen elektrischen Leiters sowie auch an den Leiteradern des Leiteraderstrangs anliegen.

Die innere Hüllschicht der Leiterhülle besteht aus einer kühlmittelundurchlässigen Aluminium-Verbundfolie. So wird verhindert, das Kühlmittel, welches die röhrenartigen Abstandhalter umströmt, über die Leiterhülle des jeweiligen elektrischen Leiters strömt. Auch dies dient der besonders effektiven Kühlung der elektrischen Leiter eines Kraftfahrzeugladekabels.

Beim erfindungsgemäßen Kraftfahrzeugladekabel wird jeder elektrische Leiter bzw. Leiteraderstrang aus Leiteradern jeweils von innen und jeweils von außen gekühlt.

Der jeweilige erste Kühlmittelkanal dient der Kühlung des jeweiligen elektrischen Leiters bzw. Leiteraderstrangs aus Leiteradern von innen. Der jeweilige zweite Kühlmittelkanal, der von den von Kühlmittel durchströmten und umströmten röhrenartigen Abstandhaltern unterteilt ist, dient der Kühlung des jeweiligen elektrischen Leiters bzw. Leiteraderstrangs aus Leiteradern von außen.

Mit der erfindungsgemäßen Ausführung bzw. Ausbildung des Kraftfahrzeugladekabels ist eine verbesserte, effektivere Kühlung der elektrischen Leiter des Kraftfahrzeugladekabels möglich.

Nach einer vorteilhaften Weiterbildung der Erfindung ist der erste Kühlmittelkanal des jeweiligen elektrischen Leiters des Kraftfahrzeugladekabels in einer ersten Richtung und der zweite Kühlmittelkanal des jeweiligen elektrischen Leiters des Kraftfahrzeugladekabels in einer entgegengesetzten zweiten Richtung vom Kühlmittel durchströmbar, wobei der erste und der zweite Kühlmittelkanal des jeweiligen elektrischen Leiters einen leiterindividuellen Kühlkreislauf des jeweiligen elektrischen Leiters des Kraftfahrzeugladekabels definieren. Der jeweilige erste Kühlmittelkanal und der jeweilige zweite Kühlmittelkanal bilden für den jeweiligen elektrischen Leiter einen leiterindividuellen Kühlkreislauf. Über den jeweiligen leiterindividuellen Kühlkreislauf wird der Leiteraderstrang aus Leiteradern des jeweiligen elektrischen Leiters sowohl von innen als auch von außen gekühlt, und zwar über den jeweiligen ersten Kühlmittelkanal, der vorzugsweise als Vorlauf dient, von innen und über den jeweiligen zweiten Kühlmittelkanal, der vorzugsweise als Rücklauf dient, von außen. Hiermit ist eine besonders effektive Kühlung der elektrischen Leiter eines Kraftfahrzeugladekabels möglich.

Nach einer vorteilhaften Weiterbildung liegen jeweils benachbarte röhrenartige Abstandhalter lose aneinander an. Die röhrenartigen Abstandhalter liegen an der inneren Hüllschicht der Leiterhülle des jeweiligen elektrischen Leiters haftend an, wozu dann die innere Hüllschicht an einer den Abstandhaltern zugewandten Seite mit einem Haftmittel beschichtet ist. Hiermit ist eine besonders effektive Kühlung der elektrischen Leiter eines Kraftfahrzeugladekabels möglich.

Nach einer vorteilhaften Weiterbildung der Erfindung ist die innere Hüllschicht der Leiterhülle des jeweiligen elektrischen Leiters aus einer Aluminium-PET-Verbundfolie gebildet.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen stark schematisierten Querschnitt durch ein Kraftfahrzeugladekabel;
- Fig. 2: ein Detail des Kraftfahrzeugladekabels der Fig. 1.

Die Erfindung betrifft ein Kraftfahrzeugladekabel für ein Gleichspannungsladen eines elektrischen Energiespeichers eines Kraftfahrzeugs.

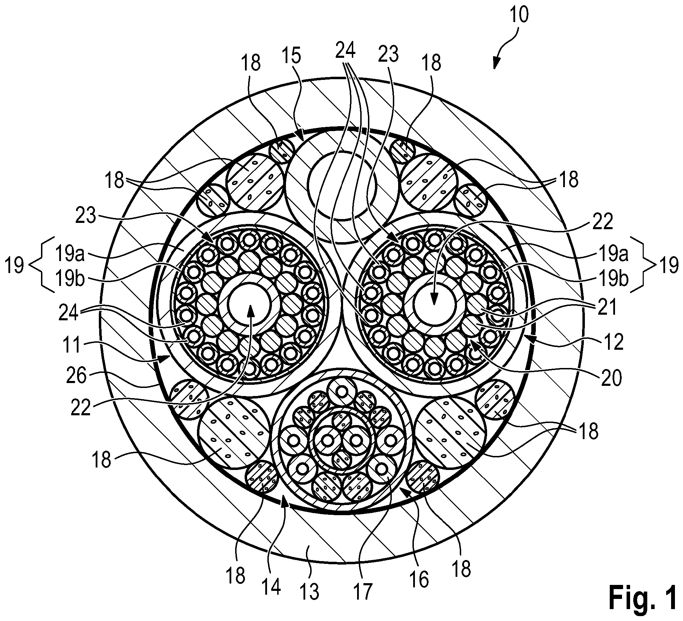

Fig. 1 zeigt einen stark schematisierten Querschnitt durch ein Kraftfahrzeugladekabel 10. Das Kraftfahrzeugladekabel 10 verfügt über einen ersten elektrischen Leiter 11 für eine erste Gleichspannungsphase sowie über einen zweiten elektrischen Leiter 12 für eine zweite Gleichspannungsphase. Die beiden elektrischen Leiter 11, 12 sind von einem Kabelmantel 13 umgeben.

Innerhalb eines vom Kabelmantel 13 definierten Hohlraums 14 des Kraftfahrzeugladekabels 10 sind im in Fig. 1 gezeigten Ausführungsbeispiel nicht nur die beiden elektrischen Leiter 11, 12 für die beiden Gleichspannungsphasen positioniert, vielmehr verlaufen innerhalb dieses Hohlraums 14 im in Fig. 1 gezeigten Ausführungsbeispiel vorzugsweise auch ein Erdleiter 15, ein Steuerleiter 16 mit mehreren Steuerleitungen 17 und Füllelemente 18. Bei den Füllelementen 18 handelt es sich vorzugsweise um zylindrische Schaumstoffelemente.

Die Füllelemente 18 füllen einen Freiraum zwischen dem Kabelmantel 13, den elektrischen Leitern 11, 12, dem Steuerleiter 16 und dem Erdleiter 15 derart aus, dass sowohl der Steuerleiter 16 als auch der Erdleiter 15 an den elektrischen Leitern 11, 12 lose anliegt und darüber hinaus auch die elektrischen Leiter 11, 12 lose aneinander anliegen. Eine Relativbewegung zwischen den im Hohlraum 14 des Kraftfahrzeugladekabels 10 positionierten Elementen, also zwischen den elektrischen Leitern 11, 12, dem Steuerleiter 16, dem Erdleiter 15 und den Füllelementen 18, ist also beschränkt.

Der erste elektrische Leiter 11 sowie der zweite elektrische Leiter 12 weisen jeweils eine Leiterhülle 19 aus einer äußeren Hüllschicht 19a und einer inneren Hüllschicht 19b auf.

Bei der jeweiligen äußeren Hüllschicht 19a handelt es sich vorzugsweise um eine Hüllschicht aus Kunststoff, insbesondere um eine äußere Hüllschicht 19a aus PE (Polyethylen).

Bei der inneren Hüllschicht 19b, die sich innen an die äußere Hüllschicht 19a der Leiterhülle 19 des jeweiligen elektrischen Leiters 11, 12 anschließt, handelt es sich um eine kühlmittelundurchlässige Aluminium-Verbundfolie, vorzugsweise um eine Aluminium-PET (Polyethylenterephthalat)-Verbundfolie.

Vorzugsweise ist die Aluminium-Verbundfolie, welche die innere Hüllschicht 19b der Leiterhülle 19 des jeweiligen elektrischen Leiters 11, 12 bereitstellt, an einer der äußeren Hüllschicht 19a zugewandten Seite mit einer Haftschicht beschichtet, sodass die beiden Hüllschichten 19a, 19b der Leiterhülle 19 des jeweiligen elektrischen Leiters 11, 12 aneinander anhaften.

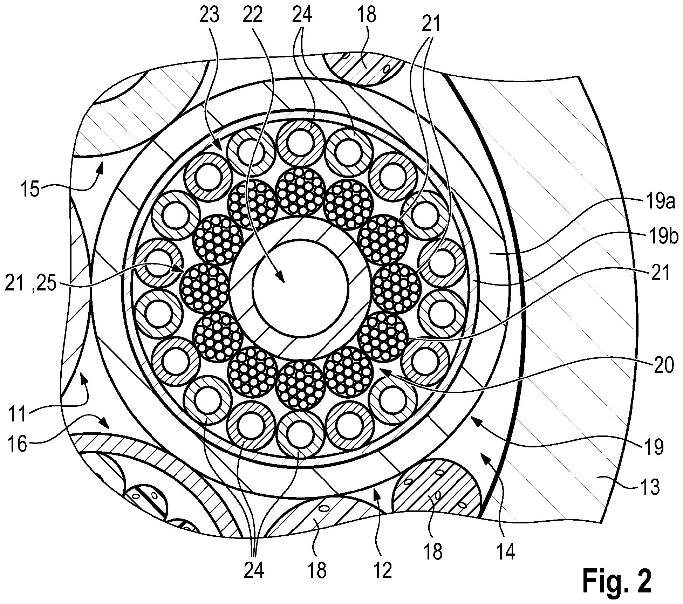

Jeder der beiden elektrischen Leiter 11, 12 verfügt über einen innerhalb der jeweiligen Leiterhülle 19 positionierten Leiteraderstrang 20 aus mehreren Leiteradern 21, wobei in dem in Fig. 1 gezeigten Ausführungsbeispiel jeder der elektrischen Leiter 11, 12 insgesamt zwölf Leiteradern 21 umfasst. Diese Anzahl kann auch unterschiedlich sein. Jede dieser Leiteradern 21 umfasst mehrere vorzugsweise verdrillte Aderlitzen 25 (siehe Fig. 2).

Jeder der beiden elektrischen Leiter 11, 12 verfügt über einen ersten Kühlmittelkanal 22 zur Kühlung des Leiteraderstrangs 20 des jeweiligen elektrischen Leiters 11, 12 von innen, wobei dieser erste, innere Kühlmittelkanal 22 von den Leiteradern 21 umschlossen ist.

Die Leiteradern 21 sind um den ersten, inneren Kühlkanal 22, der von einem Rohr oder Schlauch definiert ist, herum verdrillt.

Jeder der beiden elektrischen Leiter 11, 12 weist ferner einen zweiten Kühlmittelkanal 23 zur Kühlung des jeweiligen Leiteraderstrangs 20 des jeweiligen elektrischen Leiters 11, 12 von außen auf, wobei dieser zweite Kühlmittelkanal 23 die Leiteradern 21 des jeweiligen elektrischen Leiters 11, 12 außen umschließt.

Zwischen den Leiteradern 21 und der inneren Hüllschicht 19b der Leiterhülle 19 des jeweiligen elektrischen Leiters 11, 12 sind dabei mehrere röhrenartige Abstandhalter 24 positioniert, die den jeweiligen zweiten, äußeren Kühlmittelkanal 23 unterteilen, die vom Kühlmittel durchströmt und umströmt sind, und die einerseits aneinander und andererseits an der inneren Hüllschicht 19b der Leiterhülle 19 des jeweiligen elektrischen Leiters 11, 12 sowie auch an den Leiteradern 21 des jeweiligen elektrischen Leiters 11, 12 anliegen. In dem in Fig. 1 gezeigten Ausführungsbeispiel umfasst jeder der elektrischen Leiter 11, 12 insgesamt achtzehn röhrenartige Abstandhalter 24. Diese Anzahl kann auch unterschiedlich sein.

Der erste, innere Kühlmittelkanal 22 des jeweiligen elektrischen Leiters 11, 12 des erfindungsgemäßen Kraftfahrzeugladekabels 10 ist in einer ersten Richtung von Kühlmittel durchströmt und bildet vorzugsweise einen Kühlmittelvorlauf aus.

Über den ersten, inneren Kühlmittelkanal 22 sind die Leiteradern 21 des jeweiligen elektrischen Leiters 11, 12 von innen kühlbar.

Der zweite, äußere Kühlmittelkanal 23 des jeweiligen elektrischen Leiters 11, 12 des Kraftfahrzeugladekabels 10 ist in einer entgegengesetzten zweiten Richtung vom Kühlmittel durchströmt und bildet vorzugsweise einen Kühlmittelrücklauf aus.

Kühlmittel, welches den zweiten, äußeren Kühlmittelkanal 23 durchströmt, kühlt die Leiteradern 21 des jeweiligen elektrischen Leiters 11, 12 direkt bzw. unmittelbar von außen.

Die Leiteradern 21 des jeweiligen elektrischen Leiters 11, 12 tragen vorzugsweise keine Isolationsschicht sind also isolationsschichtfrei, sodass dieselben direkt vom Kühlmittel des zweiten, äußeren Kühlmittelkanals 23 umspült werden können.

Über den zweiten, äußeren Kühlmittelkanal 23 sind die Leiteradern 21 des jeweiligen elektrischen Leiters 11, 12 von außen kühlbar.

Der erste, innere Kühlkanal 22 sowie der zweite, äußere Kühlkanal 23 des jeweiligen elektrischen Leiters 11, 12 definieren einen leiterindividuellen Kühlkreislauf für den jeweiligen elektrischen Leiter 11, 12, nämlich für die Leiteradern 21 desselben.

Jeder elektrische Leiter 11, 12 ist einzeln bzw. individuell gekühlt, und zwar von innen und außen über einen individuellen Kühlkreislauf.

Die röhrenartigen Abstandhalter 24, die von Kühlmittel durchströmt und von Kühlmittel umströmt sind, liegen an der inneren Hüllschicht 19b der Leiterhülle 19 des jeweiligen elektrischen Leiters 11, 12 sowie an den Leiteradern 21 des jeweiligen elektrischen Leiters 11, 12 an, wobei die Abstandhalter 24 an der Innenhülle 19b der Leiterhülle 19 des jeweiligen elektrischen Leiters 11, 12 vorzugsweise haftend anliegen.

Hierzu ist vorzugsweise die Aluminium-Verbundfolie, welche die innere Hüllschicht 19b der Leiterhülle 19 des jeweiligen elektrischen Leiters 11, 12 bereitstellt, an einer von der äußeren Hüllschicht 19a abgewandten Seite mit einer Haftschicht beschichtet.

Benachbarte Abstandhalter 24 liegen jeweils lose aneinander an. Ebenso liegen die Abstandhalter 24 an den Leiteradern 21 lose an und sind vorzugsweise um die Leiteradern 21 herum verdrillt.

Zur Kühlung der Leiteradern 21 eines jeden elektrischen Leiters 11, 12 ist demnach durch den inneren, ersten Kühlmittelkanal 22 im Sinne eines Vorlaufs Kühlmittel leitbar, um die Leiteradern 21 von innen zu kühlen.

Im Bereich eines Endes des Kraftfahrzeugladekabels 10, und zwar im Bereich eines kraftfahrzeugseitigen Endes desselben, ist das durch den ersten Kühlmittelkanal 22 geleitete Kühlmittel in den zweiten, äußeren Kühlmittelkanal 23 umleitbar, um dann das Kühlmittel im Sinne eines Rücklaufs über den zweiten Kühlmittelkanal 23 vom kraftfahrzeugseitigen Ende des Kraftfahrzeugladekabels 10 in Richtung auf ein ladesäulenseitiges Ende des Kraftfahrzeugladekabels 10 zurückzuführen.

Dabei durchströmt im Bereich des zweiten Kühlmittelkanals 23 das Kühlmittel den Kühlmittelkanal 23 derart, dass die Abstandhalter 24 von dem Kühlmittel durchströmt und umströmt sind. Die innere Hüllschicht 19b der Leiterhülle 19 des jeweiligen elektrischen Leiters 11, 12 verhindert dabei, dass Kühlmittel über die Leiterhülle 19 den jeweiligen elektrischen Leiter 11, 12 verlässt.

Der Kabelmantel 13 schließt das Kraftfahrzeugladekabel 10 nach außen ab und definiert den Hohlraum 14 zur Aufnahme der elektrischen Leitern 11, 12, des Steuerleiters 16, des Erdleiters 15 und der Füllelemente 18. Auf eine dem Hohlraum 14 zugewandte Seite des Kabelmantel 13 kann optional eine Aluminium-PET-Verbundfolie 26 aufgebracht sein.

Das erfindungsgemäße Kraftfahrzeugladekabel 10 kann besonders effektiv gekühlt werden, sodass vom Kraftfahrzeugladekabel 10 Wärme effektiv abgeführt werden kann. Hierdurch ist das Kraftfahrzeugladekabel 10 insbesondere für hohe Ladeleistungen geeignet.

## Patentansprüche

1. Kraftfahrzeugladekabel (10) für ein Gleichspannungsladen eines elektrischen Energiespeichers eines Kraftfahrzeugs,
mit einem Kabelmantel (13),
mit einem ersten elektrischen Leiter (11) für eine erste Gleichspannungsphase und einem zweiten elektrischen Leiter (12) für eine zweite Gleichspannungsphase,
wobei der erste und zweite elektrische Leiter (11, 12) vom Kabelmantel (13) außen umschlossen sind,
wobei der erste und zweite elektrische Leiter (11, 12) jeweils eine Leiterhülle (19) aus einer äußeren Hüllschicht (19a) und einer inneren Hüllschicht (19b) aufweisen,
wobei der erste und zweite elektrische Leiter (11, 12) jeweils innerhalb der Leiterhülle (19) verlaufende, einen Leiteraderstrang (20) bildende Leiteradern (21) aufweisen,
wobei der erste und zweite elektrische Leiter (11, 12) jeweils einen von einem Rohr oder Schlauch definierten, ersten Kühlmittelkanal (22) zur Kühlung des jeweiligen Leiteraderstrangs (20) von innen aufweisen, der von den jeweiligen Leiteradern (21) umschlossen ist, wobei die Leiteradern (21), die jeweils mehrere Aderlitzen (25) umfassen, um den ersten Kühlmittelkanal (22) verdrillt sind,
wobei der erste und zweite elektrische Leiter (11, 12) ferner jeweils einen zweiten Kühlmittelkanal (23) zur Kühlung des jeweiligen Leiteraderstrangs (20) von außen aufweisen, der die jeweiligen Leiteradern (21) umschließt, wobei zwischen den Leiteradern (21) des Leiteraderstrangs (20) des jeweiligen elektrischen Leiters (11, 12) und der inneren Hüllschicht (19b) der Leiterhülle (19) des jeweiligen elektrischen Leiters (11, 12) röhrenartige Abstandhalter (24) positioniert sind, die den jeweiligen zweiten Kühlmittelkanal (23) unterteilen, die von Kühlmittel durchströmt und umströmt sind, und die einerseits aneinander und andererseits an der inneren Hüllschicht (19b) der Leiterhülle (19) und an den Leiteradern (21) des jeweiligen elektrischen Leiters (11, 12) anliegen,
wobei die innere Hüllschicht (19b) der Leiterhülle (19) aus einer kühlmittelundurchlässigen Aluminium-Verbundfolie besteht.

2. Kraftfahrzeugladekabel nach Anspruch 1, **dadurch gekennzeichnet, dass** der erste Kühlmittelkanal (22) des jeweiligen elektrischen Leiters (11, 12) in einer ersten Richtung und der zweite Kühlmittelkanal (23) des jeweiligen elektrischen Leiters (11, 12) in einer entgegengesetzten, zweiten Richtung vom Kühlmittel durchströmbar ist, wobei der erste und der zweite Kühlmittelkanal (22, 23) des jeweiligen elektrischen Leiters (11, 12) einen leiterindividuellen Kühlkreislauf des jeweiligen elektrischen Leiters (11, 12) definieren.

3. Kraftfahrzeugladekabel nach Anspruch 1 oder 2, **dadurch gekennzeichnet, dass** der erste Kühlmittelkanal (22) einen Kühlmittelvorlauf und der zweite Kühlmittelkanal (23) einen Kühlmittelrücklauf definieren.

4. Kraftfahrzeugladekabel nach einem der Ansprüche 1 bis 3, **dadurch gekennzeichnet, dass** jeweils benachbarte röhrenartige Abstandhalter (24) lose aneinander anliegen.

5. Kraftfahrzeugladekabel nach einem der Ansprüche 1 bis 4, **dadurch gekennzeichnet, dass** die röhrenartigen Abstandhalter (24) an der inneren Hüllschicht (19b) der Leiterhülle (19) des jeweiligen elektrischen Leiters (11, 12) haftend anliegen, wobei die innere Hüllschicht (19b) an der den Abstandhaltern (24) zugewandten Seite mit einem Haftmittel beschichtet ist.

6. Kraftfahrzeugladekabel nach einem der Ansprüche 1 bis 5, **dadurch gekennzeichnet, dass** die röhrenartigen Abstandhalter (24) um die Leiteradern (21) verdrillt sind.

7. Kraftfahrzeugladekabel nach einem der Ansprüche 1 bis 6, **dadurch gekennzeichnet, dass** die innere Hüllschicht (19b) der Leiterhülle (19) aus einer Aluminium-PET-Verbundfolie besteht.

8. Kraftfahrzeugladekabel nach einem der Ansprüche 1 bis 7, **dadurch gekennzeichnet, dass** innerhalb des Kabelmantels (13) zusätzlich zum ersten und zweiten elektrischen Leiter (11, 12) auch ein mehrere Steuerleitungen (17) aufweisender Steuerleiter (16), ein Erdleiter (15) und mehrere Füllelemente (18) angeordnet sind, wobei die Füllelemente (18) einen Freiraum zwischen dem Kabelmantel (13) und den elektrischen Leitern (11, 12), dem Steuerleiter (16) und dem Erdleiter (15) derart ausfüllen, dass sowohl der Steuerleiter (16) als auch der Erdleiter (15) an den elektrischen Leitern (11, 12) lose anliegt.

9. Kraftfahrzeugladekabel nach Anspruch 8, **dadurch gekennzeichnet, dass** auch die elektrischen Leiter (11, 12) lose aneinander anliegen.

## Claims

1. A motor vehicle charging cable (10) for a DC voltage charging , of an electrical energy storage unit of a motor vehicle,
having a cable sheath (13),
having a first electrical conductor (11) for a first DC voltage phase and a second electrical conductor (12) for a second, DC voltage phase,
wherein the first and second electrical conductors (11, 12) are surrounded on the outside by the cable sheath (13),
wherein the first and second electrical conductors (11, 12) comprise a respective conductor shell (19) of an outer shell layer (19a) and an inner shell layer (19b),
wherein the first and second electrical conductors (11, 12) comprise respective conductor cores (21) extending within the conductor shell (19) and forming a conductor core strand (20),
wherein the first and second electrical conductors (11, 12) comprise a respective first coolant channel (22) defined by -a tube or hose for cooling the respective conductor core strand (20) from the inside, which is surrounded by the respective conductor cores (21), wherein the conductor cores (21), which respectively comprise a plurality of core braids (25), are twisted around the first coolant channel (22),
wherein the first and second electrical conductors (11, 12) further comprise a respective second coolant channel (23) for cooling the respective conductor core strand (20) from the outside, which surrounds the respective conductor cores (21), wherein, between the conductor cores (21) of the conductor core strand (20) of the respective electrical conductor (11, 12) and the inner shell layer (19b) of the conductor shell (19) of the respective electrical conductor (11, 12), tubular spacers (24) are positioned, which divide the respective second coolant passages (23) through and around which coolant flows, and which abut one other, on the one hand, and, on the other hand, abut the inner shell layer (19b) of the conductor shell (19) and the conductor cores (21) of the respective electrical conductor (11, 12),
wherein the inner shell layer (19b) of the conductor shell (19) is comprised of a coolant-impermeable aluminum composite film.

2. The motor vehicle charging cable according to claim 1, **characterized in that** the coolant can flow through the first coolant passage (22) of the respective electrical conductor (11), 12) in a first direction and through the second coolant passage (23) of the respective electrical conductor (11, 12) in an opposite second direction, wherein the first and second coolant passages (22, 23) of the respective electrical conductor (11, 12) define a conductor-specific cooling circuit of the respective electrical conductor (11, 12).

3. The motor vehicle charging cable according to claim 1 or 2, **characterized in that** the first coolant passage (22) defines a coolant inflow and the second coolant passage (23) defines a coolant return flow.

4. The motor vehicle charging cable according to one of claims 1 to 3, **characterized in that** adjacent tubular spacers (24) each loosely abut one another.

5. The motor vehicle charging cable according to one of claims 1 to 4, **characterized in that** the tubular spacers (24) abut the inner shell layer, (19b) of the conductor shell (19) of the respective electrical conductor (11,12) in an adhering manner, wherein the inner shell layer (19b) is coated with a bonding agent on the side facing the spacers (24).

6. The motor vehicle charging cable according to one of claims 1 to 5, **characterized in that** the tubular spacers (24) are twisted around the conductor cores (21).

7. The'motor vehicle charging cable according to one of claims 1 to 6, **characterized in that** the inner shell layer (19b) of the conductor sheath (19) consists of an aluminum PET composite foil.

8. The motor vehicle charging cable according to one of claims 1 to 7, **characterized in that**, in addition to the first and second electrical conductors (11, 12), a control conductor (16) comprising multiple control lines (17), a ground conductor (15), and multiple filling elements (18) are arranged within the cable sheath (13), wherein the filling elements (18) fill up an open space between the cable sheath (13) and the electrical conductors (11, 12), the control conductor (16), and the ground conductor (15) in such a manner that both the control conductor (16) and the ground conductor (15) loosely abut the electrical conductors (11, 12) .

9. The motor vehicle charging cable according to claim 8, **characterized in that** the electrical conductors (11, 12) also loosely abut one another.

## Revendications

1. Câble de charge de véhicule automobile (10) destiné à la charge en tension continue d'un accumulateur d'énergie électrique d'un véhicule automobile, et comportant
une gaine de câble (13),
un premier conducteur électrique (11) relatif à une première phase de tension continue et un deuxième conducteur électrique (12) relatif à une deuxième phase de tension continue ;
lesdits premier et deuxième conducteurs électriques (11, 12) étant entourés extérieurement par la gaine de câble (13),
lesdits premier et deuxième conducteurs électriques (11, 12) présentant chacun une enveloppe de conducteur (19) composée d'une couche d'enveloppe extérieure (19a) et d'une couche d'enveloppe intérieure (19b),
lesdits premier et deuxième conducteurs électriques (11, 12) présentant chacun des fils conducteurs (21) disposés à l'intérieur de l'enveloppe de conducteur (19) et formant un toron (20),
lesdits premier et deuxième conducteurs électriques (11, 12) présentant respectivement un premier canal de réfrigérant (22) défini par un tube ou tuyau et servant au refroidissement de leur toron (20) respectif depuis l'intérieur, lequel canal est entouré par ses fils conducteurs (21) respectifs, lesdits fils conducteurs (21), comprenant chacun plusieurs âmes (25), étant torsadés autour du premier canal de réfrigérant (22),
lesdits premier et deuxième conducteurs électriques (11, 12) présentant en outre chacun un deuxième canal de réfrigérant (23) servant au refroidissement de leur toron (20) respectif depuis l'extérieur, lequel canal entoure ses fils conducteurs (21) respectifs, des entretoises (24) tubulaires étant disposées entre les fils conducteurs (21) du toron (20) du conducteur électrique (11, 12) respectif et la couche d'enveloppe intérieure (19b) de l'enveloppe (19) du conducteur électrique (11, 12) respectif, lesquelles entretoises subdivisent leur deuxième canal de réfrigérant (23) respectif sont parcourues et entourées par un flux de réfrigérant, et reposent d'une part les unes contre les autres et d'autre part, contre la couche d'enveloppe intérieure (19b) de l'enveloppe de conducteur (19) et contre les fils conducteurs (21) du conducteur électrique (11, 12) respectif,
ladite couche d'enveloppe intérieure (19b) de l'enveloppe de conducteur (19) se composant'd'une feuille d'aluminium composite perméable au réfrigérant.

2. Câble de charge de véhicule automobile selon la revendication 1, **caractérisé en ce que** le premier canal de réfrigérant (22) du conducteur électrique (11, 12) respectif peut être parcouru par le réfrigérant dans un premier sens et le deuxième canal de réfrigérant (23) du conducteur électrique (11, 12) respectif dans un deuxième sens opposé au premier, lesdits premier et deuxième canaux de réfrigérant (22, 23) des conducteurs électriques (11, 12) respectifs définissant un circuit de refroidissement propre à son conducteur électrique (11, 12) respectif.

3. Câble de charge de véhicule automobile selon la revendication 1 ou 2, **caractérisé en ce que** le premier canal de réfrigérant (22) définit une amenée de réfrigérant et le deuxième canal de réfrigérant (23) définit un retour de réfrigérant.

4. Câble de charge de véhicule automobile selon l'une des revendications 1 à 3, **caractérisé en ce que** les entretoises (24) tubulaires voisines reposent sans attache l'une contre l'autre.

5. Câble de charge de véhicule automobile selon l'une des revendications 1 à 4, **caractérisé en ce que** les entretoises (24) tubulaires reposent contre la couche d'enveloppe intérieure (19b) de l'enveloppe (19) du conducteur électrique (11, 12) respectif avec adhérence, ladite couche d'enveloppe intérieure (19b) étant enduite d'un adhésif sur sa face tournée vers les entretoises (24) .

6. Câble de charge de véhicule automobile selon l'une des revendications 1 à 5, **caractérisé en ce que** les entretoises (24) tubulaires sont torsadées autour des fils conducteurs (21).

7. Câble de charge de véhicule automobile selon l'une des revendications 1 à 6, **caractérisé en ce que** la couche d'enveloppe intérieure (19b) de l'enveloppe de conducteur (19) se compose d'une feuille composite d'aluminium-PET.

8. Câble de charge de véhicule automobile selon l'une 'des revendications 1 à 7, **caractérisé en ce qu'**il se trouve également. à l'intérieur de la gaine de câble (13), en sus des premier et deuxième conducteurs électriques (11, 12), un conducteur pilote (16) présentant plusieurs lignes de commande (17), un conducteur de terre (15) et plusieurs éléments de remplissage (18), lesdits éléments de remplissage (18) remplissant un espace demeurant entre la gaine de câble (13) et les conducteurs électriques (11, 12), le conducteur pilote (16) et le conducteur de terre (15), de telle manière que le conducteur pilote (16) ainsi que le conducteur de terre (15) reposent sans attache contre les conducteurs électriques (11, 12).

9. Câble de charge de véhicule automobile selon la revendication 8, **caractérisé en ce que** les conducteurs électriques (11, 12) reposent également sans attache l'un contre l'autre.
